# EUROPEAN PATENT APPLICATION

(11) **EP 4 624 292 A1**
(43) Date of publication of application: **01.10.2025**
(21) Application number: 24166144.6
(22) Date of filing: 26.03.2024
(51) Int. Cl.: B60W 30/08, B62D 15/02, G08G 1/16

(54) **STEERING INTERVENTIONS FOR VEHICLES**

(71) Applicant: Zenseact AB, 417 56 Göteborg (SE)
(72) Inventor: WRANNE, Staffan, 435 43 Pixbo (SE)
(74) Representative: Zacco Sweden AB

(57) **Abstract**

Methods (S100) and related aspects for executing a steering intervention for a vehicle (1) and related aspects are disclosed. In more detail, a steering capability of the vehicle is used to generate a "ramp-in path" (201) and a "ramp-out path" (203), which are then stitched together to form a complete steering intervention path (205) for the vehicle. Then, the point (215) where the two paths have been merged is selected to define a point at which the active steering is deactivated.

## Description

### TECHNICAL FIELD

The disclosed technology relates to methods and systems for executing a steering intervention for a vehicle. In particular, but not exclusively the disclosed technology relates to methods and systems for performing corrective or evasive steering manoeuvres to prevent a vehicle from moving out of lane or off the road.

### BACKGROUND

In recent years, the automotive industry has seen a significant shift towards the development and implementation of autonomous and semi-autonomous driving technologies. These technologies promise to revolutionize the way we commute and transport goods by enhancing safety, efficiency, and convenience on the roads. Semi-autonomous driving technologies may be referred to as "Advanced Driver Assistance Systems" (ADAS) and autonomous driving technologies me be referred to as "Autonomous Driving" (AD). ADAS and AD will herein be referred to under the common term Automated Driving System (ADS) corresponding to all of the different levels of automation as for example defined by the SAE J3016 levels (0 - 5) of driving automation.

One aspect related to the advancement of these technologies are steering interventions, encompassing both corrective and evasive steering manoeuvres, which play a critical role in ensuring the safety and effectiveness of automated driving systems.

Corrective steering interventions are essential for maintaining the intended trajectory of a vehicle, especially in scenarios where deviations from the planned path occur due to external factors such as road conditions, environmental changes, or unexpected obstacles. These interventions often involve real-time analysis of sensor data, including inputs from cameras, LiDAR, radar, and other perception systems, to detect deviations from the desired path and to calculate the appropriate steering commands necessary to bring the vehicle back on course. The development of precise and responsive corrective steering algorithms is paramount to ensuring smooth and safe user experiences.

Evasive steering manoeuvres, on the other hand, are critical for avoiding imminent collisions or hazards that cannot be mitigated through corrective actions alone. Whether it's swerving to avoid a pedestrian crossing the road or navigating around a suddenly obstructing object, evasive steering interventions demand rapid decision-making and precise execution to effectively safeguard both occupants of the vehicle and surrounding road users. While significant progress has been made in the development of steering interventions for autonomous and semi-autonomous vehicles, challenges persist in optimizing the performance, robustness, and adaptability of these systems across diverse driving scenarios and environmental conditions. Factors such as varying road geometries, unpredictable traffic behaviours, and dynamic road conditions present ongoing challenges that necessitate continuous innovation in steering intervention technologies.

Therefore, there exists a need for novel approaches that enhance the effectiveness, reliability, and safety of steering interventions in autonomous and semi-autonomous vehicles.

### SUMMARY

The herein disclosed technology seeks to mitigate, alleviate or eliminate one or more of the above-identified deficiencies and disadvantages in the prior art to address various problems relating to automated steering interventions for vehicles.

Various aspects and embodiments of the disclosed technology are defined below and in the accompanying independent and dependent claims.

A first aspect of the disclosed technology comprises a method for executing a steering intervention for a vehicle traveling on a road. The method comprises in response to an automated steering intervention being triggered, obtaining a first path for the vehicle, where the first path represents a ramping-up steering capability of the vehicle towards a lateral direction and defines a set of expected positions of at least a portion of the vehicle on the road in the event of an automated steering intervention, at a limit of a steering capability of the vehicle, being executed at a current moment in time. The method further comprises obtaining a second path for the vehicle, where the second path represents a ramping-down steering capability of the vehicle and defines a set of expected positions of at least a portion of the vehicle when the vehicle transitions along states of gradually reduced turning to a state of driving straight, at the limit of the steering capability of the vehicle. The state of driving straight defines an end-point of the second path. The method further comprises forming a complete steering intervention path by combining the first path and the second path at a switch-over point so that the vehicle, when executing the complete steering intervention path, transitions from the first path into the second path at the switch-over point and ends up at a selected termination point with a heading relative to the road that corresponds to a set angular offset, applying active steering while the vehicle is executing the complete steering intervention path up until reaching the switch-over point, and deactivating the active steering upon reaching the switch-over point.

Another aspect of the disclosed technology comprises a computer program product comprising instructions which, when the program is executed by a computer, causes the computer to carry out the method according to any one of the embodiments of the first aspect disclosed herein. With this aspect of the disclosed technology, similar advantages and preferred features are present as in the other aspects.

Another aspect of the disclosed technology comprises a (non-transitory) computer-readable storage medium comprising instructions which, when executed by a computer, causes the computer to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Another aspect of the disclosed technology comprises a system for executing a steering intervention for a vehicle traveling on a road. The system comprises control circuitry configured to, in response to an automated steering intervention being triggered, obtain a first path for the vehicle, where the first path represents a ramping-up steering capability of the vehicle towards a lateral direction and defines a set of expected positions of at least a portion of the vehicle on the road in the event of an automated steering intervention, at a limit of a steering capability of the vehicle, being executed at a current moment in time. The control circuitry is further configured to obtain a second path for the vehicle, where the second path represents a ramping-down steering capability of the vehicle and defines a set of expected positions of at least a portion of the vehicle when the vehicle transitions along states of gradually reduced turning to a state of driving straight, at the limit of the steering capability of the vehicle. The state of driving straight defines an end-point of the second path. The control circuitry is further configured to form a complete steering intervention path by combining the first path and the second path at a switch-over point so that the vehicle, when executing the complete steering intervention path, transitions from the first path into the second path at the switch-over point and ends up at a selected termination point with a heading relative to the road that corresponds to a set angular offset. The control circuitry is further configured to apply active steering while the vehicle is executing the complete steering intervention path up until reaching the switch-over point, and deactivate the active steering upon reaching the switch-over point. With this aspect of the disclosed technology, similar advantages and preferred features are present as in the other aspects.

Another aspect of the disclosed technology comprises a vehicle comprising a system for executing a steering intervention according to any one of the embodiments disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that automated steering interventions for vehicles may be executed with consistent performance over a wide range of scenarios.

An advantage of some embodiments is that automated steering interventions for vehicles can be executed in a safe and comfortable manner.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for executing a steering intervention for a vehicle in accordance with some embodiments.
Fig. 2a is a schematic top-view illustration of a ramp-in path in accordance with some embodiments.
Fig. 2b is a schematic top-view illustration of a ramp-out path in accordance with some embodiments.
Fig. 3a is a schematic top-view illustration of a combination of a ramp-in path and a ramp-out path in accordance with some embodiments.
Fig. 3b is a schematic top-view illustration of a complete steering intervention path resulting from the combination of the ramp-in path and the ramp-out path from Fig. 3a, in accordance with some embodiments.
Fig. 4a is a schematic top-view illustration of a combination of a ramp-in path and a ramp-out path in accordance with some embodiments.
Fig. 4b is a schematic top-view illustration of a complete steering intervention path resulting from the combination of the ramp-in path and the ramp-out path from Fig. 4a, in accordance with some embodiments.
Fig. 5 is a schematic illustration of a vehicle comprising a system for executing a steering intervention for a vehicle in accordance with some embodiments.
Fig. 6 illustrates, by way of example, a set of attainable lateral accelerations and lateral jerks of a vehicle.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

When a vehicle is to automatically perform a qualitative corrective, and in particular evasive, steering intervention, a good followability of the intervention trajectory or the intervention path is important. If the resulting intervention trajectory or intervention path has poor or uncertain followability one would either have to allow larger margins, for example by triggering the interventions earlier and thereby having more false interventions as a result, which reduces passenger comfort and user experience. Alternatively, if margins are not introduced, there is a possibility of experiencing an increased risk for failure with the automated steering interventions, which imposes potentially unacceptable safety risks (e.g., vehicle leaving the lane/road during the intervention, or colliding with a Vulnerable Road User (VRU) or another vehicle during the intervention).

Moreover, when performing steering interventions, there is a secondary issue that one may have to consider. In more detail, steering interventions are generally designed in order to steer the vehicle away from some threat or safety risk (e.g., lane departure, road departure, collision), and may in some scenarios end up placing the vehicle in a non-optimal state with regards to the vehicle's heading angle or lateral velocity once the steering intervention is completed. Ideally, a steering intervention that has been executed in order to avoid leaving the road on the right side should not cause a similar intervention to be triggered on the left side as the first steering intervention is completed. In case of an attentive driver, this may still be acceptable as the steering intervention function nevertheless gives the driver some time to react to the first dangerous situation and resume control of the steering before the steering interventions are "cascaded". However, in a situation where the driver is inattentive, these cascades of steering interventions may lead to the vehicle exiting the road/lane after some bouncing between the boundaries of the road/lane, which is not acceptable.

The term "steering intervention" is herein to be construed as encompassing both corrective steering interventions (may also be referred to as "corrective steering manoeuvre") and evasive steering interventions (may also be referred to as "evasive steering manoeuvre"). Moreover, a "steering intervention" is herein to be understood as an "automated steering intervention".

To this end, embodiments herein propose a solution for executing steering interventions for a vehicle where a steering capability of the vehicle is used to generate a "ramp-in path" and a "ramp-out path", which are then stitched together to form a complete steering intervention path for the vehicle. Then, the point where the two paths have been merged is selected to define a point at which the active steering is deactivated. Thereby, the herein proposed steering intervention solution is capable of handling a wide range of steering intervention scenarios with consistent outcomes. The notion of adding the "ramp-out path" at the latter part of the complete steering intervention path and deactivating the active steering at the point where the two paths (ramp-in and ramp-out paths) were merged along the complete steering intervention path provides a simple and robust means to execute steering interventions across a wider range of scenarios with maintained performance in terms of comfort and safety.

In more detail, the proposed solution provides a means to ensure that the vehicle ends up in a desired state upon completion of the complete steering intervention path, which may reduce the risk of ending up with the "cascaded" steering interventions mentioned in the foregoing. The desired state may for example be that the vehicle has a slight heading into the lane upon completion of the steering intervention. The "slight heading" may be defined by a set angular offset relative to the curvature of the road boundary from which the vehicle is intending to steer away. In the present context, road curvature or path curvature refers to the degree of curvature or bend in a road or path. It may be understood as a measure of how much a road or path deviates from being straight.

The steering capability of the vehicle defines how much the vehicle can steer to either side while executing a steering intervention at a limit of the steering capability given the current state of the vehicle. The steering capability can be defined by a steering capability model of the vehicle that accounts for the ramp and torque limitations of the vehicle's steering system and outputs an "attainable" lateral acceleration and an "attainable" lateral jerk given a current state of the vehicle. Then, using this steering capability model, one can estimate a "steering capability path" or "steering capability trajectory" for the vehicle, in real-time, should a steering intervention, at a limit of the steering capability of the vehicle, be triggered.

Accordingly, the present inventors realized that a simple and robust optimization with respect to the steering intervention path to be executed can be obtained by combining the above mentioned "ramp in" and "ramp out" paths. Thereby, the herein proposed solution allows for an improved tuning and consistency for steering interventions for vehicles as the steering intervention path can be tuned using a single value (the set angular offset), which allows for a consistent performance across a wide range of scenarios.

### Definitions

The term "steering intervention" may be construed as any action taken by the vehicle's control system to adjust the direction of the vehicle by controlling the vehicle's actuation mechanisms (steering, acceleration, deceleration). These interventions can be triggered for various reasons, such as path deviation correction - where if the vehicle deviates from its planned path or trajectory, the steering control system may intervene to bring the vehicle back on track, collision avoidance - when the vehicle detects an obstacle or an imminent collision, it may perform a steering intervention to steer away from the obstacle or to avoid the collision, lane keeping - where the vehicle may perform steering interventions to help keep the vehicle centred within its lane, especially in situations where the driver's input is insufficient or absent, manoeuvre execution - for example during complex manoeuvres such as lane changes or turns, the steering control system may perform interventions to execute these manoeuvres safely and smoothly.

The term "path" may be construed as an intended route that a vehicle should follow to reach its destination. It typically represents a sequence of points or waypoints that define the desired route. Paths are often planned based on factors such as road network, traffic conditions, speed limits, and any specific constraints or objectives. In the context of the present disclosure, a "steering capability path" accordingly represents the estimated route of the vehicle should a steering intervention be triggered, at a limit of the steering capability of the vehicle, at a current moment in time.

The term "trajectory" may be construed as the actual motion of the vehicle as it navigates along the path. In more detail, a trajectory may describe the specific sequence of positions and velocities that the vehicle follows over time. Trajectories may be influenced not only by the planned path but also by real-time factors such as vehicle dynamics, sensor readings, environmental conditions, and the actions of other vehicles or obstacles in the vicinity. In the present context, the term "path" is considered to encompass "trajectory" as it may be construed as a time-dependent path.

The term "steering capability" (may also be referred to as "steering capacity") may be construed as the vehicle's (or the steering system's) maximum capability to execute steering interventions towards a lateral direction of the vehicle. Stated differently, the steering capability defines the expected path or the trajectory of the vehicle when the vehicle is executing a steering manoeuvre to the left or to the right at the limit of the capability of the vehicle's steering system. The limit may be set during design-time (e.g., by the OEM and/or the supplier of the steering system) and defined such that the vehicle can maintain an expected trajectory while executing the steering intervention and such that the driver will be able to safely control the vehicle if the steering intervention would be aborted during execution.

It should be noted that the term "limit" in the "limit of the steering capability" may be a hard limit, meaning that it represents a maximum of the steering capability/capacity of the vehicle, or it may be a soft limit meaning that it represents a certain level of the steering capability of the vehicle. Stated differently, the "limit" in the "limit of the steering capability" may, by way of example, be at 80% of the steering capability of the vehicle, at 90% of the steering capability of the vehicle, or at 100% of the steering capability of the vehicle, depending on the associated specifications and particular realizations. An advantage of utilizing a "soft limit" is that the steering intervention function and other related functionality is allowed a margin of error when triggering and executing the steering intervention.

In some embodiments, the "steering capability" of a vehicle is defined by a set of attainable/allowable lateral accelerations and lateral jerks given a current speed of the vehicle and a current lateral acceleration or yaw rate of the vehicle. These attainable/allowable lateral accelerations and attainable/allowable lateral jerks can be used to derive an estimated path or trajectory of the vehicle should the vehicle execute a steering intervention at a limit or a certain level of the limit (e.g., 80% of the limit or 90% of the limit) of the vehicle's steering capability.

The "steering capability model" of the vehicle may be understood as a predefined computational or mathematical representation of the vehicle's steering behaviour and performance when operating at the limit of its steering capability. The "steering capability model" may be in the form of a look-up table that provides an actuator response given a steering request as input. The look-up table may for example be populated using simulations with a high-fidelity vehicle model that has been correlated to measurements and/or using measurements from tests with an actual vehicle.

In some embodiments, the look-up table may comprise a position or state of the vehicle at time t+1 given a state of the vehicle at time t while turning the vehicle at the limit or a certain level (e.g., 80% of the limit or 90% of the limit) of the steering capability of the vehicle. However, in some embodiments the look-up table may comprise a set of attainable lateral accelerations and lateral jerks at specific speeds of the vehicle, and the steering capability paths/trajectories may be computed by deriving a trajectory that requires the vehicle to be manoeuvred at or at a certain level (e.g., 80% or 90%) of attainable lateral accelerations and lateral jerks throughout the derived trajectory.

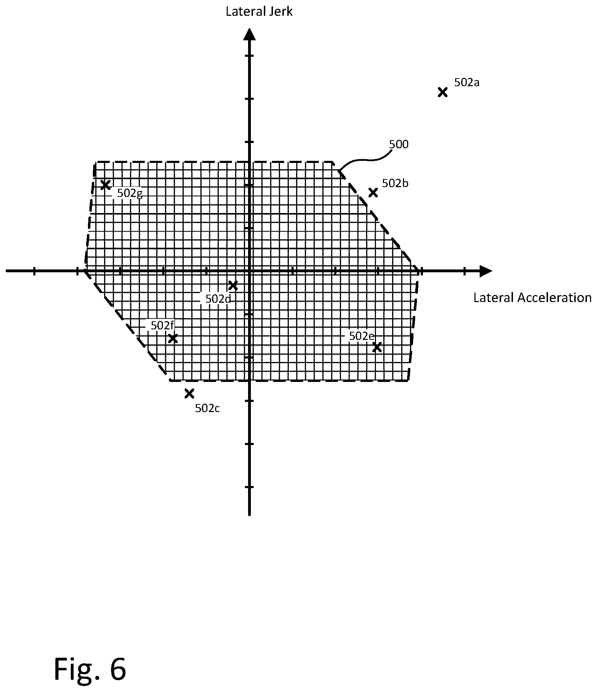

The wording "attainable", as in "attainable lateral acceleration" or "attainable lateral jerk", may in the present context be understood as values of lateral acceleration and lateral jerk that a steering system of the vehicle can achieve without diverging from a predicted vehicle trajectory. Put differently, the steering system (or the vehicle itself) may be limited in regards to what lateral accelerations or lateral jerk is possible or allowed to achieve. The limitations may be due to different reasons, such as physical limitations of the vehicle or other regulations associated with automated driving systems. For example, for ADS level 1 and level 2 features it is envisioned that the (maximum) "attainable lateral acceleration" or (maximum) "attainable lateral jerk" is predefined and set so that a driver of the vehicle will be able to control the vehicle for any single fault in the ADS and vehicle platform. These limitations may thus be represented by thresholds which can be determined as a function of steering limitations implemented in the vehicle, e.g. as a "safety limiter". The thresholds or limits of lateral acceleration and lateral jerk respectively, are further discussed in connection with Fig. 6.

### Example Embodiments

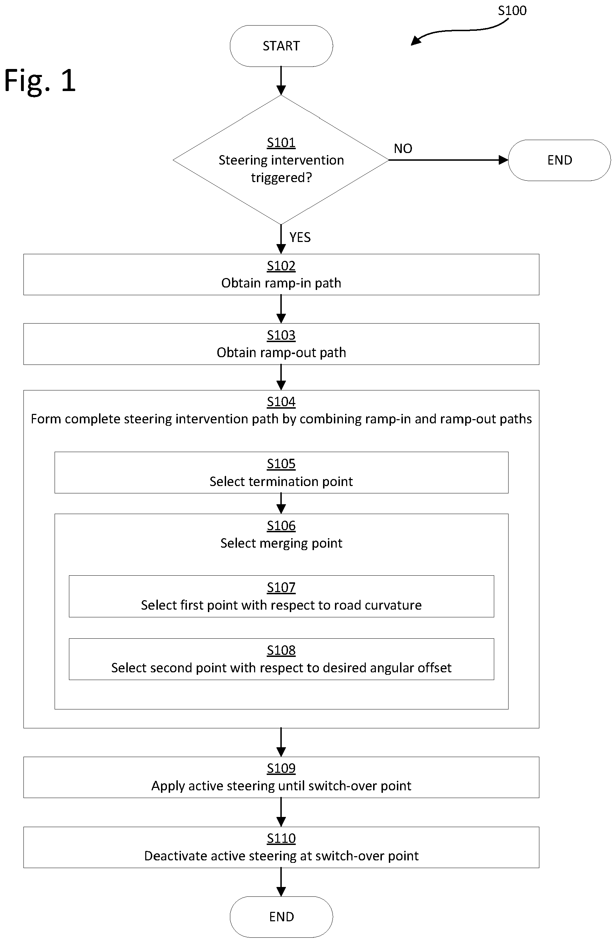

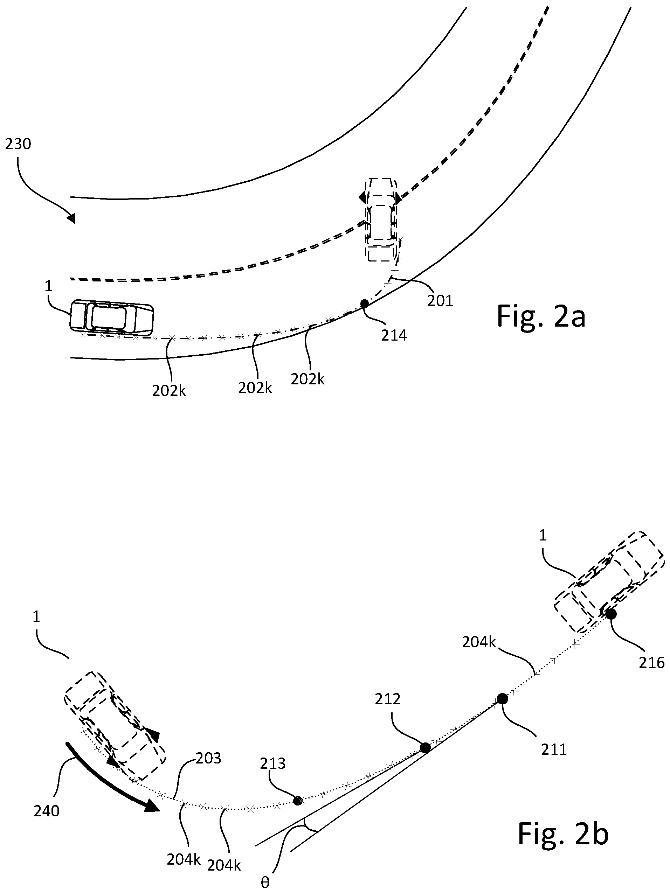

Fig. 1 is a schematic flowchart representation of a method S100 for executing a steering intervention for a vehicle. The method S100 is preferably a computer-implemented method S100, performed by a processing system of the vehicle. The processing system may for example comprise one or more processors and one or more memories coupled to the one or more processors, wherein the one or more memories store one or more programs that perform the steps, services and functions of the method S100 disclosed herein when executed by the one or more processors. In the following, references will also be made to Figs. 2a, 2b, 3a, 3b, 4a, and 4b in order to elucidate the understanding of the herein disclosed technology.

Accordingly, the method S100 for executing a steering intervention is generally performed in response to an automated steering intervention being triggered S101. The triggering S101 may for example be caused due to the vehicle being deemed in risk of exiting a road boundary, a lane boundary, or any general drivable area. Thus, the following description of the method S100 is to be construed as performed in response to the automated steering intervention being triggered. The trigger conditions may be monitored by a separate module or function in the vehicle, or they may be monitored by the same module or function responsible for executing the steering intervention. In some embodiments, the triggering and/or the execution may be controlled by a so-called Lane Support System (LSS) or Lane Keeping Aid (LKA) function.

As used herein, the term "in response to" may be construed to mean "when" or "upon" or "if" depending on the context. Similarly, the phrase "in response to determining" or "when it is determined" or "in an instance of" may be construed to mean "upon determining" or "if its determined" or "upon detecting and identifying occurrence of an event" or "in response to detecting occurrence of an event" depending on the context. In more detail, the phrase "in response to X being triggered" may be understood as "in response to detecting that X has been triggered", "in response to determining that one or more triggering conditions for X has/have been fulfilled", and so forth. Accordingly, the phrase "if X equals Y" may be construed as "when X equals Y", "when it is determined that X equals Y", "in response to X being equal to Y", or "in response to detecting/determining that X equals Y" depending on the context.

Moving on, the method S100 comprises obtaining S102 a first path (may be referred to as "ramp-in path") 201 for the vehicle 1 on the road 230. Here, the first path 201 represents a ramping-up steering capability of the vehicle 1 towards a lateral direction, and the first path 201 further defines a set of expected positions 202k of at least a portion of the vehicle 1 (e.g., a lateral side of the vehicle) on the road in the event of an automated steering intervention, at a limit of a steering capability of the vehicle 1, being executed at a current moment in time.

Accordingly, the first path (i.e., ramp-in path) 201 is an expected path or trajectory of the vehicle 1 should it be steered towards a lateral direction (e.g., left or right) at a limit of the steering capacity of the vehicle 1 given the current state of the vehicle 1 (e.g., speed and yaw rate/lateral acceleration).

In the schematic illustration of Fig. 2a, the first path 201 is accordingly a path or trajectory defining a set of expected positions 202k of the right side of the vehicle 1 (e.g., right end of the rear axis) should an automated (left) steering intervention, at the limit of the steering capability of the vehicle 1, be executed at a current moment in time.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a path of the vehicle may encompass determining or computing a path of the vehicle. Thus, as used herein, "obtaining" may indicate that a parameter is received at a first entity/unit from a second entity/unit, or that the parameter is determined at the first entity/unit e.g. based on data received from another entity/unit.

The method S100 further comprises obtaining S103 a second path (may be referred to as a "ramp-out path") 203 for the vehicle 1 on the road 230. Here, the second path represents a ramping-down steering capability of the vehicle 1, and the second path 203 further defines a set of expected positions 204k of at least the portion of the vehicle 1 when the vehicle 1 transitions along states of gradually reduced turning to a state of driving straight, at a limit of the steering capability of the vehicle 1. Moreover, the state of driving straight defines an end-point 216 of the second path 203.

Accordingly, the second path (ramp-out path) 203 is an expected path or trajectory of the vehicle 1 should it transition from a state decreasingly applied steering to a state of driving straight. In other words, the ramp-out path may be understood as a process by which the vehicle's trajectory transitions from a curved path to a straight path as the steering input is gradually reduced (continuously or in discrete steps), at a limit of the steering capability of the vehicle. In effect, the second path (ramp-out path) 203 will be a path or trajectory of the vehicle 1 when it transitions from a state decreasingly applied steering to a state of driving straight without any application of active steering to the steering system of the vehicle, but due to the momentum of the vehicle 1.

In practice, one can use the steering capability model of the vehicle 1 (going from a state of driving straight to progressively more steering at the limit of the steering capability of the vehicle) but then apply it backwards. By applying it backwards, the calculations can be done forwards (increasingly more steering) as for the ramp-in path, but one instead obtains the ramp-out path (gradually reduced steering) without the need to define the start condition from which the steering is decreased. Furthermore, one may construe the "ramp-out" path 203 as an inverse of the ramp-in path 201 under the assumption that the vehicle's initial state of the ramp-in path has no yaw-rate or lateral acceleration and that the steering capability is the same for the two paths.

In the schematic illustration of Fig. 2b, the second path 203 is accordingly a path or trajectory defining a set of expected positions 204k of the right side of the vehicle 1 (e.g., right end of the rear axis) should the vehicle transition along states of gradually reduced turning to a state of driving straight (as indicated by arrow 240) at the limit of the steering capability of the vehicle 1.

The phrase "at least a portion of the vehicle" in the "set of expected positions of at least the portion of the vehicle" may be understood as that the paths or trajectories are in reference to a specific part of portion of the vehicle (e.g., lateral edges of the vehicle). However, the paths or trajectories may also be in reference to a point along the longitudinal centre axis of the vehicle, such as e.g., the centre of the rear axis (not shown). However, defining the paths or trajectories in reference to a lateral side of the vehicle may be advantageous for steering intervention operations as it may provide a simple way to ensure that no part of the vehicle crosses the boundary that the vehicle was deemed to be in risk of crossing and therefore warranted the steering intervention. As readily understood by the skilled reader, the right side of the vehicle may be used as a reference for left steering interventions and the left side of the vehicle may be used as a reference for right steering interventions.

In some embodiments, the first path 201 and the second path 203 are generated based on a predefined steering capability model of the vehicle 1 that outputs or otherwise provides the corresponding set of expected positions 202k, 204k of at least a portion of the vehicle 1 based on a given state of the vehicle 1. The given state of the vehicle may for example include a speed of the vehicle and a yaw rate or lateral acceleration of the vehicle.

In some embodiments, the predefined steering capability model of the vehicle is dependent on a ramp limitation and a torque limitation of a steering system of the vehicle. In more detail, the ramp limitation defines a restriction on a rate at which a steering input can change for the steering system of the vehicle and the torque limitation defines a restriction on an amount of torque or force that can be applied to the steering system of the vehicle.

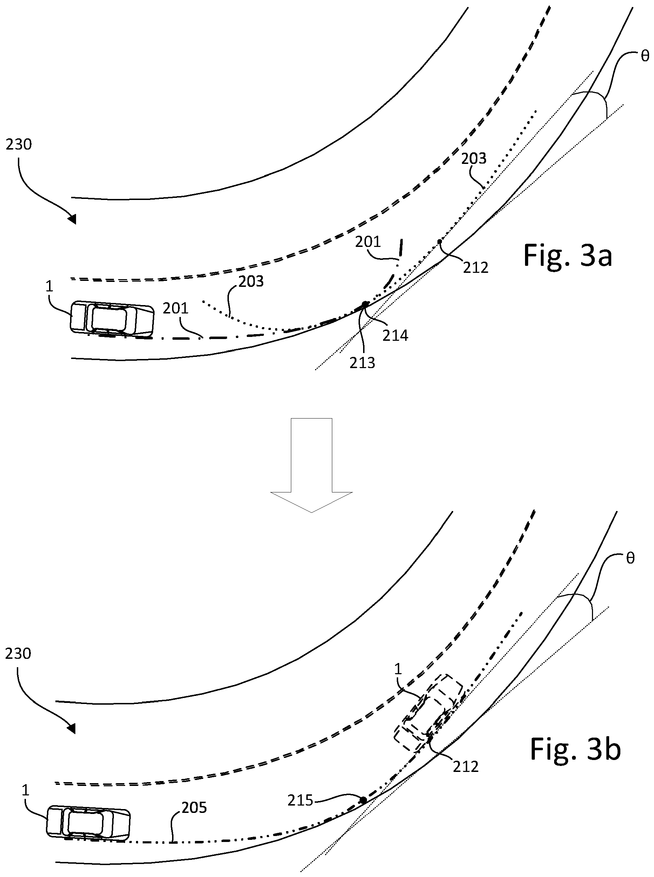

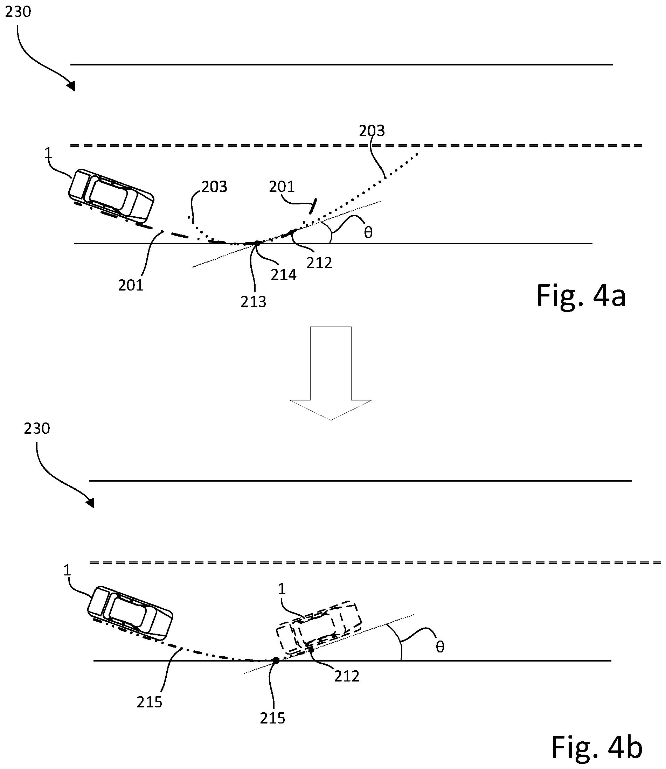

Further, the method S100 comprises forming S104 a complete steering intervention 205 path by combining the first path 201 and the second path 203 at a switch-over point 215 so that the vehicle 1, when executing the complete steering intervention path 205, transitions from the first path 201 to the second path 203 at the switch-over point 215 and ends up at a selected termination point 212 with a heading relative to the road that corresponds to a set angular offset θ. The "heading" relative to the road may be understood as a "heading angle into the road" or "heading angle into the lane" relative to a line representing the curvature of the road 230 as for example indicated in Figs. 3a, 3b, 4a, and 4b.

In other words, the method S100 comprises forming S104 a complete steering intervention path 205 by "stitching" together the first path (ramp-in path) 201 with the second path (ramp-out path) 203 so that an initial portion of the complete steering intervention path 205 is defined by a portion of the first path 201 and an end portion of the complete steering intervention path 205 is defined by a portion of the second path 203. Accordingly, the complete steering intervention path 205 is not to be construed as the entire first path 201 plus the entire second path 203, but rather parts thereof. In particular, the initial portion of the complete intervention path 205 is defined by an initial segment of the first path 201, and the end segment of the first path 201 is replaced with a segment of the second path 203 to form the complete steering intervention path 205.

Moreover, the point of the complete steering intervention path 205 where it transitions from the first path 201 to the second path 203 is defined as a "switch-over point" 215, and the complete intervention path 205 ends at a selected termination point 212 so that the heading of the vehicle 1, into the road or into lane at the termination point 212, corresponds to a set angular offset. Accordingly, in some embodiments, the set angular offset θ defines a desired heading into lane/road for the vehicle 1 upon finishing the automated steering intervention. The set angular offset may be 0 degrees, i.e., the desired heading of the vehicle is to be parallel with the road. However, in some embodiments, the set angular offset may be any value between 5 and 15 degrees, or even up to 25 degrees. The set angular offset may for example be dependent on the specific scenario, and the road curvature ahead of the vehicle. The set angular offset may be a dynamic value that is set in dependence of the curvature of the road ahead of the vehicle upon the steering intervention being triggered. By having the set angular offset as a dynamic value, one can optimize the end-state of the vehicle upon completing the steering intervention so to reduce the risk of having to trigger another steering intervention shortly thereafter in case the driver is inattentive or otherwise indisposed.

In some embodiments, the forming S104 of the complete steering intervention path 205 comprises selecting S105 a termination point 212 along the second path (ramp-out path) 203 where the second path 203 has, relative to the end-point 216 (i.e., the last point of the second path), substantially the same curvature as the road 230 together with the set angular offset. In other words, if one were to take a first tangent at the end-point 216 of the second path and a second tangent at the termination point 212 along the second path, the angle between these two tangents would be the road curvature plus the set angular offset relative to a straight line. Accordingly, the termination point 212 is selected S105 such that the vehicle 1 has a heading (into lane) relative to the road edge that corresponds to the set angular offset θ upon reaching the termination point 212.

Furthermore, the forming S104 of the complete steering intervention path may comprise selecting S106 a first merging point 213 along the second path 203 where a curvature of the second path 203 is substantially the same as a curvature at a second merging point 214 of the first path 201. Moreover, the selected S106 merging point 213 along the second path 203 is prior to the selected S105 termination point 212. Furthermore, the selection between the first merging point 213 and the second merging point 214 may further depend on that the vehicle, upon reaching the selected S105 termination point, 1 has a heading (into lane) relative to the road edge that corresponds to the set angular offset θ. By adding this condition into an optimization solver for the "stitching" of the two paths 201, 203, one can ensure that there is always only a single solution to the optimization problem.

The forming S104 of the complete steering intervention path may further comprise forming the complete steering intervention path 205 so that the first path 201, at the second merging point 214, transitions into the second path 203 at the selected S106 first merging point 213. Here, the transition from the first path 201 to the second path 203 defines the switch-over point 215. This is for example illustrated in Figs. 3a-3b and 4a-4b where the paths 201, 202 are merged at their corresponding merging points 213, 214 and then once the paths 201, 202 are combined the point of merger defines the switch-over point 215.

In some embodiments, the selection S104 of a termination point along the second path comprises selecting S107 a first point 211 along the second path 203 where the second path 203 has substantially the same curvature as the road, and then selecting S108 a second point 212 along the second path that occurs before the selected first point 211 where a change in angle θ between the selected first point 211 and the selected second point 212 is the set angular offset (see e.g., Fig. 2b). Here, the selected second point 212 defines the termination point 212. Moreover, the term "change in angle" may be construed as "change in degree of curvature".

Further, the method S100 comprises applying S109 active steering while the vehicle is executing the formed S104 complete steering intervention path 205 up until reaching the switch-over point 215, and deactivating S110 active steering upon reaching the switch-over point 215. In some embodiments, the complete steering intervention path 205 ends at the termination point 212. Here, the application S109 of active steering may be construed as that the steering of the vehicle is actively regulated by providing input signals to one or more actuators that actuate the steering system of the vehicle 1. Analogously, the deactivation S110 of the active steering may be construed as that the steering of the vehicle 1 is not actively regulated, i.e., there are no input signals being provided to the one or more actuators that actuate the steering system of the vehicle 1.

Some embodiments herein are at least partly based on the notion that the steering of a vehicle traveling at speed will straighten out (if not active steering is applied) simply based on the momentum of the vehicle. Thus, when the vehicle 1 is executing the complete steering intervention path 205 and reaches the switch-over point 215, which defines the transition from active steering to inactive steering, the vehicle 1 will "automatically" straighten out at a limit of the steering capability of the vehicle due to the momentum of the vehicle (without the need for applying active steering after the switch-over point). Thereby, the need for complex tuning of the steering intervention functionality of the vehicle, so that it can handle a wide range of scenarios, may be alleviated as the "active" part of the steering is limited only to a portion of the complete steering intervention path. Moreover, by using the knowledge of the vehicle's capabilities, and in particular its steering capability, one can have "control" during the ramp-out part of the complete steering intervention path without actively steering the vehicle. Also, by deactivating the active steering the risk of having an uncomfortable regulation (e.g., jerky manoeuvres) of the steering is reduced. Thus, the herein proposed solution allows for improved performance and good predictability for automated steering interventions without excessive steering regulation during the actual intervention.

Executable instructions for performing these functions are, optionally, included in a non-transitory computer-readable storage medium or other computer program product configured for execution by one or more processors.

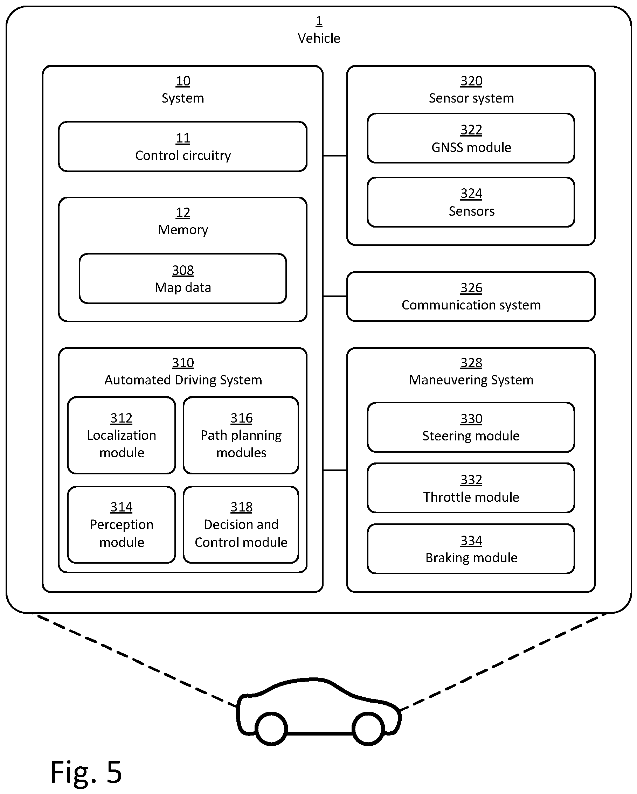

Fig. 5 is a schematic illustration of an ADS-equipped vehicle 1 comprising a system 10 for executing a steering intervention in accordance with some embodiments. As used herein, a "vehicle" is any form of motorized transport. For example, the vehicle 1 may be any road vehicle such as a car (as illustrated herein), a motorcycle, a (cargo) truck, a bus, etc.

The system 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). The control circuitry 11 may be configured to perform the functions of the method S100 disclosed herein, where the functions may be included in a (non-transitory) computer-readable storage medium 12 or other computer program product configured for execution by the control circuitry 11. In other words, the system 10 comprises one or more memory storage areas 12 comprising program code, the one or more memory storage areas 12 and the program code configured to, with the one or more processors 11, cause the system 10 to perform the method S100 according to any one of the embodiments disclosed herein.

Moreover, the system 10 may form a part of the ADS 310, i.e. the system 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods S100 disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices, and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. The map data may for example define a road model of a surrounding environment of the vehicle. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 5. Moreover, the vehicle 1 may comprise further elements than those shown in Fig. 5. While the various elements are herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 5 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as Wi-Fi^{®}, LoRa^{®}, Zigbee^{®}, Bluetooth^{®}, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. The perception module 314 may for example be configured to generate and output a road model and/or a free-space area estimation (or drivable-space estimation).

The localization module 312 and/or the perception module 314 may be communicatively connected to the sensor system 320 in order to receive sensory data from the sensor system 320. The localization module 312 and/or the perception module 314 may further transmit control instructions to the sensor system 320.

Accordingly, the control circuitry 11 is configured to, in response to an automated steering intervention being triggered, obtain a first path 201 for the vehicle 1 on the road. The first path represents a ramping-up steering capability of the vehicle 1 towards a lateral direction and defines a set of expected positions 202k of at least a portion of the vehicle 1 on the road in the event of an automated steering intervention, at a limit of a steering capability of the vehicle, being executed at a current moment in time. The control circuitry 11 is further configured to obtain a second path 203 for the vehicle on the road. The second path represents a ramping-down steering capability of the vehicle and defines a set of expected positions 204k of at least a portion of the vehicle when the vehicle transitions along states of gradually reduced turning to a state of driving straight, at the limit of the steering capability of the vehicle. Moreover, the state of driving straight defines an end-point 216 of the second path 203.

The control circuitry 11 is further configured to form a complete steering intervention path by combining the first path 201 and the second path 203 at a switch-over point 215 so that the vehicle, when executing the complete steering intervention path, transitions from the first path into the second path at the switch-over point 215 and ends up at a selected termination point 212 with a heading relative to the road that corresponds to a set angular offset.

Furthermore, the control circuitry is configured to apply active steering while the vehicle is executing the complete steering intervention path 205 up until reaching the switch-over point, and deactivate the active steering upon reaching the switch-over point.

Fig. 6 illustrates, by way of example, a set 500 of attainable lateral accelerations and lateral jerks of a vehicle. The set 500 of attainable lateral accelerations and lateral jerks illustrated herein is merely to be seen as an illustrative example for improved understanding, and may not represent an actual set 500 of attainable lateral accelerations and lateral jerks. It should be further noted that the set 500 of attainable lateral accelerations and lateral jerks may be dependent on the speed of the vehicle. Thus, the illustrated set 500 of attainable lateral accelerations and lateral jerks may only be representative of a certain speed. In some embodiments, several different sets of attainable lateral accelerations and lateral jerks associated with various velocities of the vehicle may be used.

The set 500 of attainable lateral accelerations and lateral jerks are herein represented by a region in the two-dimensional space spanned by a first axis of lateral accelerations and a second axis of lateral jerk. Further illustrated are a number of points 502a-g. Each point 502a-g represents an example of predicted lateral acceleration and lateral jerk of a predicted vehicle trajectory. Points which are inside the region representing the set 500 of attainable lateral accelerations and jerk (i.e. points 502d-g) are determined at attainable. Points which are outside the region representing the set 500 of attainable lateral accelerations and jerk (i.e. points 502a-c) are determined as unattainable.

Referring back to Figs. 2a-b, the points 202k, 204k may be derived from the points at the border (or at a certain distance from the border) of the set 500 of attainable lateral accelerations and lateral jerks. In other words, the first and second paths/trajectories 201, 203 may be formed on basis of the points residing at the border (or at a certain distance from the border) of the set 500 of attainable lateral accelerations and lateral jerks.

The set 500 of attainable lateral accelerations and lateral jerks may be represented by a set of values of attainable lateral accelerations and lateral jerks. The steering intervention paths/trajectories, that are to define a set of expected future positions of at least a portion of the vehicle in the event of an automated steering intervention, at a limit of the steering capability, being executed at a current moment in time may then be determined or otherwise derived by ensuring that the lateral acceleration/jerk at each projected future position is at the border (or at a certain distance from the border) of the set 500 of attainable lateral accelerations and lateral jerks. However, in some embodiments, the steering capability model is configured to account for the set 500 of attainable lateral accelerations and lateral jerks.

As indicated in Fig. 6, the attainable lateral accelerations and lateral jerks may be negative or positive values depending on the direction of the steering intervention and the coordinate system being used, as readily understood by the skilled person in the art.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle, for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining, forming, applying, deactivating, and selecting steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method (S100) for executing a steering intervention for a vehicle (1) traveling on a road (230), the method comprising:
in response to an automated steering intervention being triggered:
obtaining (S102) a first path (201) for the vehicle, wherein the first path represents a ramping-up steering capability of the vehicle towards a lateral direction and defines a set of expected positions (202k) of at least a portion of the vehicle on the road in the event of an automated steering intervention, at a limit of a steering capability of the vehicle, being executed at a current moment in time;
obtaining (S103) a second path (203) for the vehicle, wherein the second path represents a ramping-down steering capability of the vehicle and defines a set of expected positions (204k) of at least a portion of the vehicle when the vehicle transitions along states of gradually reduced turning to a state of driving straight, at the limit of the steering capability of the vehicle, wherein the state of driving straight defines an end-point (216) of the second path (203);
forming (S104) a complete steering intervention path by combining the first path (201) and the second path (203) at a switch-over point (215) so that the vehicle, when executing the complete steering intervention path, transitions from the first path into the second path at the switch-over point and ends up at a selected termination point (212) with a heading relative to the road that corresponds to a set angular offset;
applying (S109) active steering while the vehicle is executing the complete steering intervention path (205) up until reaching the switch-over point, and
deactivating (S110) the active steering upon reaching the switch-over point.

2. The method (S100) according to claim 1, wherein the first path and the second path are generated based on a predefined steering capability model of the vehicle that outputs the corresponding set of expected positions of at least the portion of the vehicle based on a given state of the vehicle.

3. The method (S100) according to claim 2, wherein the given state of the vehicle includes a velocity of the vehicle (1), and a yaw rate of the vehicle or lateral acceleration of the vehicle.

4. The method (S100) according to any one of claims 2-3, wherein the predefined steering capability model of the vehicle is dependent on a ramp limitation and a torque limitation of a steering system of the vehicle, and
wherein the ramp limitation defines a restriction on a rate at which a steering input can change for the steering system of the vehicle and the torque limitation defines a restriction on an amount of torque or force that can be applied to the steering system of the vehicle.

5. The method (S100) according to any one of claims 1-4, wherein the set angular offset defines a desired heading into lane of the vehicle when finishing the automated steering intervention.

6. The method according to any one of claims 1-5, wherein the forming (S104) of the complete steering invention path (205) by combining the first path (201) and the second path (203) comprises:
selecting (S105) the termination point (212) along the second path where the second path has, relative to the end-point, substantially the same curvature as the road together with the set angular offset (θ);
selecting (S106) a first merging point (213) along the second path where a curvature of the second path (203) is substantially the same as a curvature at a second merging point (214) of the first path (201), wherein the merging point (213) along the second path is prior to the selected (S105) termination point;
forming the complete steering intervention path (205) so that the first path, at the second merging point (214), transitions into the second path at the selected first merging point (213), the transition from the first path to the second path defining the switch-over point (215);

7. The method (S100) according to claim 6, wherein the selection (S104) of a termination point along the second path comprises:
selecting (S107) a first point (211) along the second path where the second path has substantially the same curvature as the road; and
selecting (S108) a second point (212) along the second path that occurs before the selected first point where a change in angle (θ) between the selected first point and the selected second point is the set angular offset, wherein the selected second point (212) defines the termination point (212).

8. The method (S100) according to any one of claims 1-7, wherein the complete steering intervention path ends at the termination point.

9. A computer program product comprising instructions which, when the program is executed by a computer, causes the computer to carry out the method (S100) according to any one of claims 1-8.

10. A computer-readable storage medium comprising instructions which, when executed by a computer, causes the computer to carry out the method (S100) according to any one of claims 1-8.

11. A system for executing a steering intervention for a vehicle traveling on a road, the system comprising control circuitry configured to:
in response to an automated steering intervention being triggered:
obtain a first path (201) for the vehicle, wherein the first path represents a ramping-up steering capability of the vehicle towards a lateral direction and defines a set of expected positions (202k) of at least a portion of the vehicle on the road in the event of an automated steering intervention, at a limit of a steering capability of the vehicle, being executed at a current moment in time;
obtain a second path (203) for the vehicle, wherein the second path represents a ramping-down steering capability of the vehicle and defines a set of expected positions (204k) of at least a portion of the vehicle when the vehicle transitions along states of gradually reduced turning to a state of driving straight, at the limit of the steering capability of the vehicle, wherein the state of driving straight defines an end-point (216) of the second path (203);
form a complete steering intervention path by combining the first path (201) and the second path (203) at a switch-over point so that the vehicle, when executing the complete steering intervention path, transitions from the first path into the second path at the switch-over point and ends up at a selected termination point (212) with a heading relative to the road that corresponds to a set angular offset;
apply active steering while the vehicle is executing the complete steering intervention path (205) up until reaching the switch-over point, and
deactivate the active steering upon reaching the switch-over point.

12. The system according to claim 11, wherein the set angular offset defines a desired heading into lane of the vehicle when finishing the automated steering intervention.

13. The system according to any one of claims 11-12, wherein the complete steering invention path ends at the termination point.

14. A vehicle comprising a system according to any one of claims 11-13.
